# EUROPÄISCHE PATENTANMELDUNG

(11) **EP 2 436 249 A2**
(43) Veröffentlichungstag der Anmeldung: **04.04.2012**
(21) Anmeldenummer: 11401587.8
(22) Anmeldetag: 06.09.2011
(51) Int. Cl.: A01B 29/04

(54) **Landwirtschaftliche Maschine**

(30) Priorität: 30.09.2010 DE 102010037872
(71) Anmelder: Amazonen-Werke H. Dreyer GmbH & Co. KG, 49205 Hasbergen (DE)
(72) Erfinder: Reinke, Wilfried, 26123 Oldenburg (DE); Tiessen, Reimer Uwe, 26135 Oldenburg (DE)

(57) **Zusammenfassung**

Landwirtschaftliche Maschine mit einer Walze und einem gezogenen Gestell, wobei die Walze wenigstens ein Rohr aufweist, dass drehbar um eine horizontale Achse mittels Lagern angebracht ist, und mit dem Gestell verbunden sind, wobei das Rohr mit einer Reihe von Reifen versehen ist, die auf das Rohr aufgereiht sind und jeweils Umfangsprofile in erhabener Form aufweisen, die in der Lage sind, in der Erde einer Reihe von parallelen Furchen zu bilden, wobei die Reifen wenigstens einen Abschnitt mit erhabenen Profil aufweisen, der einen Rollabschnitt hat, der mit dem Mantel durch zwei Flanken so verbunden ist, dass ein ringförmiger Hohlraum eines Querschnitts gebildet wird, der gegenüber dem Querschnitt des erhabenen Profils vermindert ist, wobei die Wand des Mantels des Hohlraumes des Reifens auf seiner dem Rohr zugewandten Seite zumindest einen Durchbruch aufweist. Um in einfacher Weise eine Erhöhung der Tragfähigkeit der Walze der landwirtschaftlichen Maschine zu erreichen, ist vorgesehen, dass der zumindest eine Durchbruch in der Wand des Hohlraumes über geeignete Mittel mit einer der Walze zugeordneten Luftdruckbeaufschlagungseinrichtung verbunden ist.

## Beschreibung

Die Erfindung betrifft eine landwirtschaftliche Maschine gemäß des Oberbegriffes des Patentanspruches 1.

Eine derartige landwirtschaftliche Maschine ist durch die EP 0 878 328 B1 bekannt. Diese landwirtschaftliche Maschine weist eine Bodenwalze mit Gummihohlreifen auf. Diese Gummihohlreifen besitzen einen Abschnitt mit erhabenem Profil. Dieser Abschnitt hat einen Rollabschnitt, der mit dem Mantel durch zwei Flanken so verbunden ist, dass ein ringförmiger Hohlraum eines Querschnitts gebildet wird, der gegenüber dem Querschnitt des erhabenen Profils vermindert ist.

Derartige Walzen haben sich in der Praxis bewährt. In neuerer Zeit besteht jedoch die Tendenz, Walzen mit größerem Durchmesser und somit auch größeren Querschnitt des erhabenen Profils einzusetzen. Dieser größere Querschnitte weisen bei dem Abrollen auf der Bodenoberfläche eine fehlende Stabilität auf, insbesondere wenn derartige Walzen bei relativ schweren Maschinen eingesetzt werden. Diese fehlende Stabilität ist auf eine fehlende Knicksteifigkeit in den Flanken des erhabenen Profils zurückzuführen. Diese größeren Walzen mit dem größeren erhabenen Profil können somit keine hohen Lasten aufnehmen, ohne dass es zu Beschädigungen an den Reifen der Walze kommt.

Der Erfindung liegt die Aufgabe zu Grunde, in einfacher Weise eine Erhöhung der Tragfähigkeit der Walze der landwirtschaftlichen Maschine zu erreichen.

Diese Aufgabe der erfindungsgemäß dadurch gelöst, dass der zumindest eine Durchbruch in der Wand des Hohlraumes über geeignete Mittel mit einer der Walze zugeordneten Luftdruckbeaufschlagungseinrichtung verbunden ist.

Infolge dieser Maßnahme ist es möglich, über die Luftdruckbeaufschlagungseinrichtung den Hohlraum des Reifens mit einem erhöhten Luftdruck zu beaufschlagen. Wenn der Hohlraum des Reifens, insbesondere die Hohlräume des erhabenen Profils mit dem erhöhten Luftdruck beaufschlagt werden, wird die erforderlichen Teile und Bereiche der Walze stabilisiert. Es wird also einfach ein geeigneter Luftdruck zur Stabilisierung in den Hohlraum des erhabenen Profils über die Luftdruckbeauftragungseinrichtung hineingedrückt.

Um in einfacher Weise Luft in den Hohlraum des erhabenen Profils hineindrücken zu können, ist vorgesehen, dass auf der dem Rohr zugewandten Seite der Wand des Reifens sich zumindest ein luftdruckführender Bereich befindet. Hierdurch können alle gewünschten Bereiche der Reifen mit dem erforderlichen Luftdruck beaufschlagt werden. Somit kann die Druckluft auf einfache Weise in die Luftkanäle zwischen dem zentralen Tragrohr und dem Fuß der Reifen gelangen. Von hier aus kann dann die Luft in die Hohlräume der Reifen strömen.

In einfacher Weise kann die Zuführung der Druckluft zu den einzelnen Reifen dadurch erreicht werden, dass der druckluftführende Bereich als zumindest eine in axialer Richtung verlaufende nutähnliche Aussparung ausgebildet ist.

Eine einfache Ausgestaltung der Luftdruckbeaufschlagungseinrichtung ergibt sich dadurch, dass diese als Reifendruckregelanlage ausgebildet ist.

Hierbei sei darauf hingewiesen, dass der Unterschied der bekannten Kombination aus Felgen und Reifen zu der erfindungsgemäßen Ausgestaltung darin besteht, dass die erfindungsgemäßen Reifen mit den erhabenen Profil gegen einander gepresst sind und mithilfe einer umlaufenden Dichtung zwischen den einzelnen Reifen sich ein geschlossener Gesamtraum ergibt, der dann mit einem erhöhten Luftdruck insgesamt beaufschlagt wird. Hierbei kann die umlaufenden Dichtung zwischen den einzelnen Reifen so ausgestaltet sein, dass die Reifen gegeneinander verdreht werden können, ohne dass Luft entweicht.

Weitere Einzelheiten der Erfindung sind der Beispielsbeschreibung und den Zeichnungen zu entnehmen. Hierbei zeigen
- Fig. 1: die einer landwirtschaftliche Maschine zugeordneten Bodenwalze im Schnitt,
- Fig.2: einen Teilbereich der Bodenwalze in der Darstellungsweise nach Fig. 2 im vergrößertem Maßstab,
- Fig. 3: den Teilbereich der Bodenwalze gemäß Fig. 2 in perspektivischer Darstellung und
- Fig. 4: einen Reifen in Teildarstellung in Seitenansicht.

Die Walze 1 ist Bestandteil einer nicht dargestellten landwirtschaftlichen Maschine mit einem gezogenen Gestell. Die Walze 1 ist in diesem nicht dargestellten Gestell drehbar gelagert. Die Walze 1 weist ein zentrales Tragrohr 2 auf, das mittels Lagerzapfen 3 um eine horizontale Achse 4 drehbar in dem Gestell in nicht dargestellter Weise angebracht ist. Auf dem Rohr 2 ist eine Anzahl von Reifen 5 angeordnet, die von der Seite auf das zentrale Tragrohr 2 aufgeschoben und mittels der Seitenplatten 6, wie durch die Pfeile 7 angedeutet ist gegen einander gepresst sind. Somit sind die Reifen 5 abdichtend zueinander auf dem Rohr 2 aufgereiht. Die einzelnen Reifen 5 sind zueinander mittels einer umlaufenden Dichtung 8 gegeneinander abgedichtet.

Die Reifen 5 weisen Umfangsprofile 9 mit einer erhabenen Form auf, die in der Lage sind, in der Erde einer Reihe von parallelen Furchen zu bilden.

Weiterhin weisen die Reifen 5 wenigstens einen Abschnitt mit erhabenen Profil 9 auf, der ein Rollabschnitt 10 hat, der mit dem Mantel 11 durch zwei Flanken 12 so verbunden ist, dass ein ringförmiger Hohlraum 13 eines Querschnittes gebildet wird, der gegenüber dem Querschnitt des erhabenen Profils 9 vermindert ist. Die Wand des Mantels 11 des Hohlraumes 13 des Reifens 5 weist auf seiner dem Rohr 2 zugewandten Seite den Durchbruch 14 auf. Weiterhin weist der Reifen 5 auf seiner dem Tragrohr 2 zugewandten Seite der Wand 11 des Reifens 5 eine in axialer Richtung verlaufende nutähnliche Aussparung 15 auf. Diese nutähnliche Aussparung 15 ist als luftdruckführender Bereich, wie nachstehend noch erläutert wird, ausgestaltet. Somit befindet sich auf der dem Rohr 2 zugewandten Seite der Wand 11 des Reifens 5 ein luftdruckführender Bereich, der als nutähnliche Aussparung 15 ausgebildet ist.

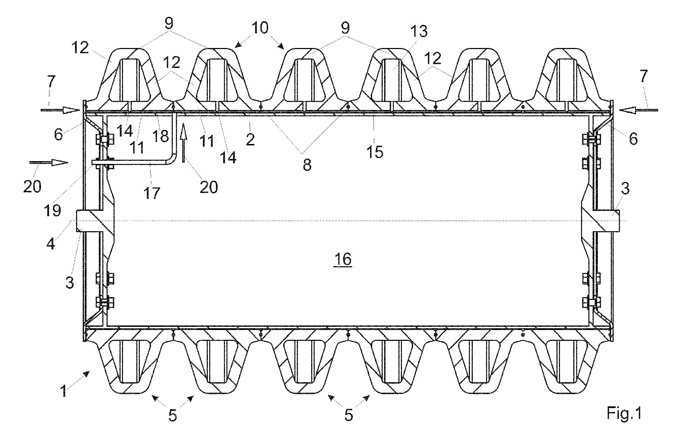

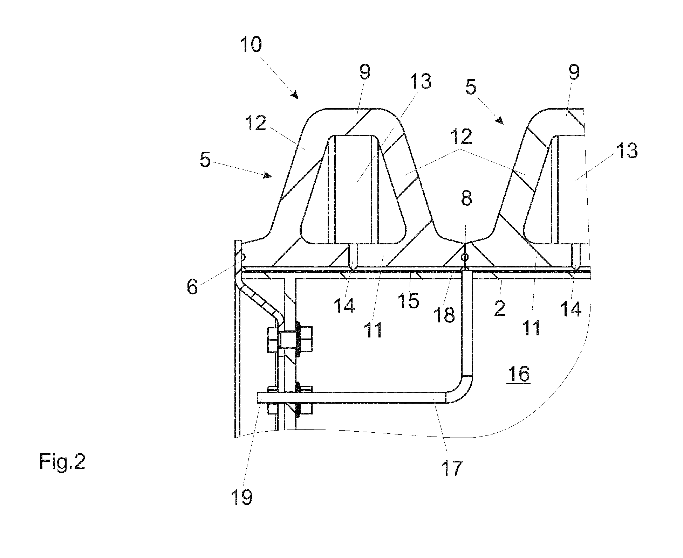

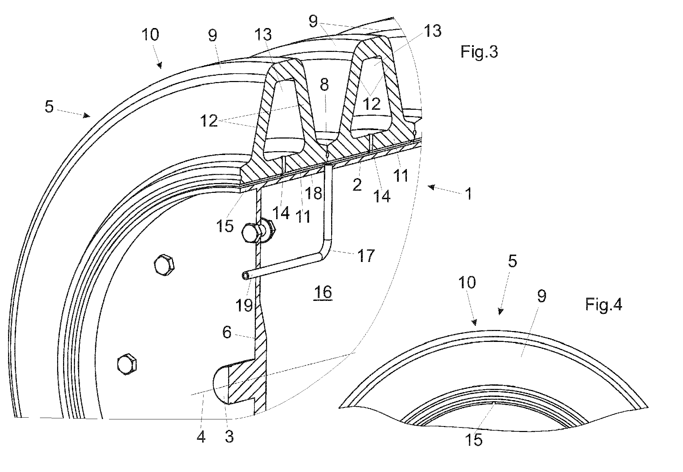

Weiterhin ist im Inneren 16 des Tragrohres 2 eine Luftdruckleitung 17 angeordnet, die durch einen Durchbruch in der Wand 18 des Tragrohres 2 nach außen geführt ist und in dem Bereich, in dem die Reifen 5 auf dem Tragrohr 2 angeordnet sind, an einer Stelle ausmündet, wie in den Fig. 1-3 zeigt ist. Das äußere Ende 19, welches aus den Seitenplatten 6 herausgeführt ist, ist mit einer geeigneten, nicht dargestellten Luftdruckbeaufschlagungseinrichtung, die beispielsweise als Reifendruckregelanlage ausgebildet sein kann, verbunden. Hierdurch ist, wie durch die Pfeile 20 symbolisiert ist, Luft in den Hohlraum 13 der Reifen 5 über die Leitung 17 und die nutähnliche Aussparung 15 zu drücken.

Durch die in den Hohlraum 13 gedrückte Luft werden die Flanken 12 des erhabenen Profils 9 der Reifen 5 in einfacher Weise stabilisiert. Der Luftdruck kann über die Luftdruckbeaufschlagungseinrichtung entsprechend den Erfordernissen eingestellt werden.

## Patentansprüche

1. Landwirtschaftliche Maschine mit einer Walze und einem gezogenen Gestell, wobei die Walze wenigstens ein Rohr aufweist, das drehbar um eine horizontale Achse mittels Lagern angebracht ist, und mit dem Gestell verbunden sind, wobei das Rohr mit einer Anzahl von Reifen versehen ist, die auf das Rohr aufgereiht sind und jeweils Umfangsprofile in erhabener Form aufweisen, die in der Lage sind, in der Erde einer Reihe von parallelen Furchen zu bilden, wobei die Reifen wenigstens einen Abschnitt mit erhabenen Profil aufweisen, der einen Rollabschnitt hat, der mit dem Mantel durch zwei Flanken so verbunden ist, dass ein ringförmiger Hohlraum eines Querschnitts gebildet wird, der gegenüber dem Querschnitt des erhabenen Profils vermindert ist, wobei die Wandung des Mantels des Hohlraumes des Reifens auf seiner dem Rohr zugewandten Seite zumindest einen Durchbruch aufweist, **dadurch gekennzeichnet, dass** der zumindest eine Durchbruch (14) in der Wand (11) des Hohlraumes (13) über geeignete Mittel mit einer der Walze (1) zugeordneten Luftdruckbeaufschlagungseinrichtung verbunden ist.

2. Walze nach Anspruch eins, **dadurch gekennzeichnet, dass** auf der dem Rohr (2) zugewandten Seite der Wand (11) des Reifens (5) sich zumindest ein luftdruckführender Bereich (15) befindet.

3. Walze nach Anspruch zwei, **dadurch gekennzeichnet, dass** der druckluftführende Bereich als zumindest eine in axialer Richtung verlaufende nutähnliche Aussparung (15) ausgebildet ist.

4. Walze nach zumindest einem der vorstehenden Ansprüche, **dadurch gekennzeichnet, dass** die Luftdruckbeaufschlagungseinrichtung als Reifendruckregelanlage ausgebildet ist.
